# EUROPÄISCHE PATENTSCHRIFT

(11) **EP 1 477 649 B1**
(45) Veröffentlichungstag und Bekanntmachung des Hinweises auf die Patenterteilung: **29.10.2014**
(21) Anmeldenummer: 04003450.6
(22) Anmeldetag: 17.02.2004
(51) Int. Cl.: F02D 11/10

(54) **Stellvorrichtung für eine Verbrennungskraftmaschine**
Actuating device for an internal combustion engine
Dispositif d'actionnement pour un moteur à combustion interne

(30) Priorität: 14.05.2003 DE 10321653
(43) Veröffentlichungstag der Anmeldung: 17.11.2004
(73) Patentinhaber: Pierburg GmbH, 41460 Neuss (DE)
(72) Erfinder: Bürger, Frank, 52355 Düren (DE); Ludwig, Norbert, 41379 Brüggen (DE)
(74) Vertreter: Patentanwälte ter Smitten Eberlein Rütten Partnerschaftsgesellschaft

(56) Entgegenhaltungen:
- WO-A-96/41120
- DE-A1- 4 243 778
- US-A- 5 933 005

## Beschreibung

Die Erfindung betrifft eine Stellvorrichtung für eine Verbrennungskraftmaschine mit einem Gehäuse, in dem ein Antriebsmotor angeordnet ist, der über ein Getriebe eine Welle eines Stellorgans antreibt, wobei zumindest ein Magnet in funktionaler Verbindung zu einem feststehend im Gehäuse angeordneten berührungslosen Schalter, insbesondere einem Hall-Schalter steht und in fest vorgegebener Position zur Welle und mit dieser bewegbar angeordnet ist, so daß bei Bewegung des Magneten der berührungslose Schalter einen Polübergang detektiert und wenigstens ein Signal erzeugt, welches eine Steuereinrichtung verarbeitet.

Stellvorrichtungen zur Verstellung von auf einer Welle angeordneten Stellorganen, wie beispielsweise Schalt-, Drossel- oder Drallklappen in Verbrennungsmotoren, sind allgemein bekannt und werden in einer Vielzahl von Anmeldungen beschrieben. Bei vielen dieser Anwendungen ist es ausreichend, eine Stellvorrichtung zur Verfügung zu stellen, mit der zwei unterschiedliche Endlagen beziehungsweise Winkellagen zuverlässig angesteuert werden können. Im Fall der erwähnten Klappen sind dies zumeist Winkelstellungen von 0 und 90°.

In der DE 101 00 966 A1 wird eine Steuereinrichtung für ein Stellorgan beschrieben, bei der eine Abschaltung des Motors erfolgt, wenn das Magnetfeld eines Diametralmagneten durch eine Lageänderung zu einem Hall-Schalter an diesem ein Signal erzeugt. Dabei ist der Diametralmagnet über eine Welle mit dem Stellorgan verbunden. Der Antrieb der Stellvorrichtung erfolgt über einen Elektromotor und ein anschließendes Getriebe. Ein weiteres Beispiel der Verwendung von Magnelen, um die Winkelstellung eines Drosselklappenventils zu bestimmen, ist in dem Dokument DE-4243778 gezeigt.

In der noch nicht veröffentlichten deutschen Anmeldung mit dem Aktenzeichen 102 04 199 wird eine weitere Steuereinrichtung für eine Stellvorrichtung beschrieben, bei der bei Erreichen einer einzustellenden Position eines zu verstellenden Stellorgans ein Signal erzeugt wird, mit welchem zusätzlich die folgende Laufrichtung des Motors voreingestellt werden kann. Dazu wird von einem Hall-Schalter, der mit einem Magneten zusammen wirkt, bei entsprechender Stellung des Stellorgans ein Signal bereit gestellt, welches auf einen Logikschaltkreis geführt wird, wo es mit einem am anderen Eingang des Logikschaltkreises anliegenden Stellsignal verglichen wird. Über eine nachfolgende Brückenendschaltung wird ein entsprechendes Ansteuersignal für den Motor ausgegeben. Zur Erzeugung des Signals am Hall-Schalter wird entweder ein segmentierter Diametralmagnet verwendet, wobei bei Polungsumkehrung zwischen Nord und Süd das entsprechende Signal am Hall-Schalter erzeugt wird, oder ein Ring- bzw. Teilringmagnet, wobei der Hall-Schalter dann nicht auf eine Polungsumkehr, sondern auf das Erreichen eines vorgegebenen Spannungswertes, der programmierbar ist, das notwendige Signal erzeugt.

Die beschriebenen Stellvorrichtungen mit segmentiertem Diametralmagnet oder Ringmagnet haben jedoch die Nachteile, daß die Herstellung der Magneten sehr aufwendig und somit kostenintensiv ist und ihre Anordnung in einer Stellvorrichtung einen erhöhten Bauraumbedarf zur Folge hat. Des weiteren ist ihre Befestigung in der Stellvorrichtung relativ aufwendig. Auch eine optimierte Ausführung der gesamten Stellvorrichtung zur weiteren Bauraum- und Herstellkostenminimierung wird nicht beschrieben.

Dementsprechend stellt sich dem Fachmann die Aufgabe, eine Stellvorrichtung zu schaffen, die kostengünstig herzustellen ist, einen geringen Bauraumbedarf aufweist und eine zuverlässige Ansteuerung der gewünschten Endlagen ermöglicht.

Diese Aufgabe wird dadurch gelöst, daß zwei Stiftmagnete unterschiedlicher Polarität in fest vorgegebener Position zur Welle des Stellorgans angeordnet sind und in funktionaler Verbindung zum berührungslosen Schalter stehen, wobei das erzeugte Signal zur Voreinstellung der Laufrichtung des Motors dient. Solche Stiftmagnete können sehr klein ausgeführt werden und sind in ihrer Herstellung kostengünstig. Wird ein Magnet nun ausreichend nah an den beispielsweise als Hall-Schalter ausgeführten berührungslosen Schalter heran geführt, so erzeugt dieser aufgrund des auf ihn wirkenden magnetischen Feldes ein Signal, welches entsprechend der nicht veröffentlichten Anmeldung mit dem Aktenzeichen 102 04 199 verarbeitet werden kann. Je nach Polarität des wirkenden Magneten kann das Signal dann in einer folgenden Logikschaltung als 0 oder 1 verarbeitet werden. Stimmt dieses Signal mit einem externen Steuersignal, welches am zweiten Eingang der Logikschaltung anliegt, überein, so stoppt der Elektromotor. Bei unterschiedlichen an der Logikschaltung anliegenden Eingangssignalen dreht der Elektromotor, wobei die Drehrichtung des Motors durch das Signal des Hall-Schalters jeweils vorbestimmt wird. Auf diese Weise wird mit nur einem externen Steuersignal ein Rechts-Links-Lauf des Motors erzielt. Selbstverständlich ist es auch möglich, andere Logikschaltungen einzusetzen, so daß beispielsweise ein Stoppen des Motors durch unterschiedliche anliegende Signale programmiert werden kann.

In einer bevorzugten Ausführungsform sind die Stiftmagnete in einem Winkel zu einer Drehachse der anzutreibenden Welle angeordnet, der im wesentlichen dem Verstellwinkel zwischen Endlagen der Welle entspricht. Hierdurch wird auf einfache Art und Weise eine Endlagenschaltung über einen einzelnen berührungslosen Schalter ohne nachfolgende Getriebestufen realisiert.

In einer vorteilhaften Ausgestaltung der Erfindung sind die Stiftmagnete an einem Teilkranzschneckenrad angeordnet, der mit einer Abtriebswelle des Getriebes zumindest drehfest verbunden ist und über eine Schnecke, welche mit einer Antriebswelle des Motors drehfest verbunden ist, antreibbar ist. Durch eine solche Ausführung ist es möglich, mit einer reduzierten Anzahl von Bauteilen den benötigten Bauraum weiter zu verringern. Entsprechend der benötigten Endlagen der anzutreibenden Welle und somit der Klappen kann das Teilkranzschneckenrad sich je nach Ausführung lediglich über 90 oder 180° erstrecken, so daß weiterer Bauraum eingespart werden kann. Zur einfacheren Befestigung der Stiftmagnete und verbesserten Lage zum berührungslosen Schalter werden diese, statt auf der Abtriebswelle des Getriebes, am Teilkranzschneckenrad angebracht.

Zur Vereinfachung der Montage kann das Teilkranzschneckenrad zwei Aufnahmen aufweisen, in die die Stiftsegmente formschlüssig anbringbar sind, wodurch ein weiteres Ausrichten der Magnete gegenüber dem berührungslosen Schalter nicht mehr notwendig ist.

In einer alternativen Ausführungsform sind die Stiftmagnete lediglich am Teilkranzschneckenrad verklebt, wobei es auch möglich ist, zusätzlich zu der formschlüssigen Aufnahme eine Klebeverbindung in den Aufnahmen herzustellen.

In einer vorteilhaften Ausführungsform weist das Gehäuse zwei Lagerstellen auf, in denen die Abtriebswelle des Getriebes gelagert ist und von denen die erste Lagerstelle nach außen offen und die zweite Lagerstelle nach außen geschlossen ausgeführt ist, wobei die Abtriebswelle an dem in der ersten Lagerstelle angeordneten Ende derart ausgeführt ist, daß eine Kupplung zur anzutreibenden Welle des Stellorgans formschlüssig mit der Abtriebswelle verbindbar ist. Durch diese Ausführungsform kann die komplette Stellvorrichtung vormontiert werden und mit beliebigen anzutreibenden Wellen verbunden werden, ohne daß diese in der Stellvorrichtung gelagert werden müssen. Es ergibt sich somit ein modularer Aufbau mit vielfältigen Einbaumöglichkeiten. Die Kupplung zwischen der Abtriebswelle des Getriebes und der anzutreibenden Welle vereinfacht die Montage der Stellvorrichtung deutlich.

Zusätzlich kann das Gehäuse zweiteilig ausgeführt sein, wobei ein erstes Gehäuseteil die erste Lagerstelle, einen elektrischen Anschluß für einen Stecker sowie Aufnahmen zur Fixierung einer Leiterplatte, auf der Elektronikbausteine und der berührungslose Schalter angeordnet sind, des Elektromotors und des Getriebes aufweist, und ein zweites Gehäuseteil die zweite Lagerstelle aufweist, wobei durch Verbinden des zweiten Gehäuseteils mit dem ersten Gehäuseteil ein im wesentlichen dichter Verschluß der Stellvorrichtung und eine feste Position aller Einbauteile in der Stellvorrichtung herstellbar ist. Durch diese Ausführung wird ein Zusammenstecken der Einzelteile und somit eine automatisierte Montage der Stellvorrichtung ermöglicht, wodurch weitere Kosten eingespart werden können. Durch den dichten Verschluß mit Hilfe der Verbindung der beiden Gehäuseteile wird die Stellvorrichtung vor äußeren Einflüssen im Betrieb zusätzlich geschützt.

Eine solche erfindungsgemäße Stellvorrichtung hat einen extrem geringen Bauraumbedarf und ist gleichzeitig kostengünstig herzustellen und zu montieren. Sie ermöglicht des weiteren eine verschleißfreie und berührungslose Klappensteuerung mit Rechts-Links-Lauf und vorgebbaren Winkelendstellungen. Aufgrund ihrer Größe und ihres modularen Aufbaus ist sie im Motor zur Klappenverstellung universell einsetzbar und nachrüstbar.

Ein Ausführungsbeispiel ist in den Zeichnungen dargestellt und wird nachfolgend beschrieben.

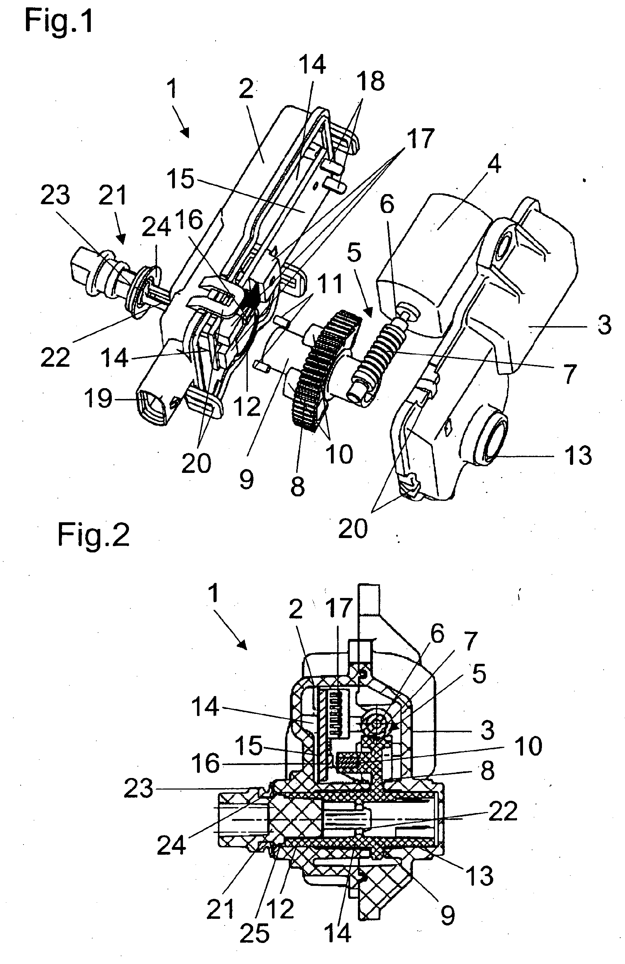

Figur 1 zeigt in gesprengter Darstellung eine perspektivische Ansicht einer erfindungsgemäßen Stellvorrichtung.
Figur 2 zeigt eine geschnittene Darstellung der erfindungsgemäßen Stellvorrichtung aus Figur 1 in Seitenansicht.

Die dargestellte Stellvorrichtung 1 besteht aus einem zweiteiligen Gehäuse 2, 3 in dem ein Elektromotor 4 angeordnet ist, der über ein Getriebe 5 eine nicht dargestellte Klappenwelle antreibt. Der Elektromotor 4 weist eine Antriebswelle 6 auf, auf der eine Schnecke 7 fest angeordnet ist. Die Schnecke 7 greift in die Verzahnung eines Schneckenrades ein, welches als Teilkranzschneckenrad 8 ausgeführt ist und sich im vorliegenden Ausführungsbeispiel lediglich über einen Winkel von 90° erstreckt. Natürlich ist es möglich je nach Anwendung, falls größere Verstellwinkel beispielsweise von 0 bis 180° erforderlich sind, dieses Teilkranzschneckenrad 8 mit größerem möglichen Laufwinkel des Teilkranzes auszuführen.

Das Teilkranzschneckenrad 8 ist auf einer Abtriebswelle 9 des Getriebes 5 fest angeordnet und weist zwei Aufnahmen 10 auf, die in einem Winkel von etwa 90° zueinander angeordnet sind und zur Befestigung zweier unterschiedlich gepolter Stiftmagnete 11 dienen. Die Abtriebswelle 9 ist in zwei Lagerstellen 12, 13 gelagert, wovon eine erste Lagerstelle 12 im Gehäuseteil 2 angeordnet ist und eine zweite Lagerstelle 13 im Gehäuseteil 3 angeordnet ist. Des weiteren weist das Gehäuseteil 2 Aufnahmen 14 auf, die zur Fixierung einer Leiterplatte 15, des Elektromotors 4 und des Getriebes 5 im Gehäuseteil 2 dienen. Auf der Leiterplatte 15 sind ein Hall-Schalter 16 sowie weitere Elektronikbausteine 17 angeordnet ist. Des weiteren weist die Leiterplatte 15 Anschlußkontakte 18 für den Elektromotor 4 auf. Im Gehäuseteil 2 ist des weiteren ein Anschluß 19 für einen Stecker angeordnet, über den die Leiterplatte 15 und somit der Elektromotor 4 und der Hall-Schalter 16 elektrisch mit einer Spannungsquelle bzw. der Motorsteuerung verbunden werden können. Der Hall-Schalter 16 ist so auf der Leiterplatte 15 angeordnet, daß er bei Drehung des Teilkranzschneckenrades 8 in den gewünschten Endlagen durch das magnetische Feld der ihm dann unmittelbar gegenüberliegenden Stiftmagnete 11 geschaltet wird.

Der Zusammenbau der Stellvorrichtung erfolgt indem zunächst das erste Gehäuseteil 2 mit der Leiterplatte 15 bestückt wird, auf der der Hall-Schalter 16 und die Elektronikbausteine 17 bereits angebracht ist. Anschließend kann der Elektromotor 4 mit der Schnecke 7 auf die Anschlußkontakte 18 der Leiterplatte 15 gesteckt werden, wobei sowohl der Elektromotor 4 in der Aufnahme 14 als auch die Welle der Schnecke 7 in vorhandenen Lagerstellen eine feste Position im Gehäuseteil 2 einnehmen. Zusätzlich wird das Teilkranzschneckenrad 8 mit den vormontierten Stiftmagneten 11 in die erste Lagerstelle 12 des Gehäuseteils 2 eingesetzt. Da aufgrund der vorgesehenen Anordnung die Bauteile (4-9,15) im Gehäuseteil 2 vorfixiert sind, kann nun das zweite Gehäuseteil 3, beispielsweise über eine Clipsverbindung 20 mit dem Gehäuseteil 2 verbunden werden, so daß die Abtriebswelle 9 in der zweiten Lagerstelle 13 zu liegen kommt und die Stellvorrichtung 1 nun vollständig dicht verschlossen ist. Dazu ist die zweite Lagerstelle 13 so ausgeführt, daß sie nach außen hin geschlossen ist. Die erste Lagerstelle 12 ist offen ausgeführt, so daß ein Anschluß einer anzutreibenden nicht dargestellten Welle ermöglicht wird. Dies erfolgt über eine Kupplung 21, deren erstes Ende über eine formschlüssige Clipsverbindung 22 mit der Abtriebswelle 9 fest verbunden wird. An der Kupplung befindet sich eine Absatz 23, auf dem eine Dichtung 24 angeordnet ist, welche eine Öffnung 25 des Gehäuseteils 2 nach dem Zusammenbau dicht verschließt. Die Kupplung 21 kann an ihrem zweiten Ende eine Ausnehmung aufweisen, die so ausgeführt ist, daß die anzutreibende Welle formschlüssig in diese Ausnehmung gesteckt werden kann, wodurch eine Drehmomentübertragung auf die anzutreibende Welle erfolgen kann.

Der Elektromotor 4 der Stellvorrichtung 1 wird nun über eine nicht dargestellte Steuereinrichtung angetrieben, die aus einem Logikschaltkreis und einer Brückenendschaltung bestehen kann. Dabei vergleicht die Logikschaltung ein Stellsignal eines nicht dargestellten separaten Steuergerätes mit einem Signal des Hall-Schalters 16. Liegt nun also ein Stellsignal vom Steuergerät am Logikschaltkreis an, schaltet dieser durch, vorausgesetzt zu diesem Zeitpunkt wird vom Hall-Schalter 16 kein definiertes Signal geliefert, woraus folgt, daß die Stellung des Teilkranzschneckenrades 8 zu diesem Zeitpunkt so ist, daß keiner der Stiftmagnete 11 mit seinem elektrischen Feld auf den Hall-Schalter 16 einwirkt. Dreht der Motor nun aufgrund des Stellsignals des Steuergerätes weiter, so ändert sich die Lage der Stiftmagneten 11 zum Hall-Schalter 16 solange bis einer der Stiftmagnete 11 nahe genug an den Hall-Schalter 16 herangeführt ist, so daß sein elektrisches Feld auf ihn einwirkt. Daraufhin gibt der Hall-Schalter 16 ein definiertes Signal an den Logikschaltkreis, wodurch der Elektromotor 4 abgeschaltet wird. In einer einfachen Ausführungsform handelt es sich beim Logikschaltkreis um eine einfache UND-Schaltung, so daß bei gleichen Signalen 0 beziehungsweise 1 des Steuergeräts und des Hall-Schalters 16 der Motor 4 stoppt. Durch das Signal des Hall-Schalters 16 wird gleichzeitig eine Laufrichtungsänderung des Elektromotors 4 vorbereitet. Tritt nun also der Fall ein, daß das externe Steuergerät sein Signal ändert, so bewegt sich der Elektromotor in die andere Richtung beziehungsweise über das Getriebe 5 die anzusteuernde Welle mit den beispielsweise darauf angeordneten Klappen und zwar so lange bis wiederum der Hall-Schalter 16 durch das Vorbeiführen des zweiten anders gepolten Stiftmagneten 11 schaltet, so daß wiederum zwei gleiche Signale am Logikschaltkreis anliegen, wodurch der Motor wiederum stoppt.

Auf diese Weise entfällt bei Neustart der Verbrennungskraftmaschine eine erforderliche Abfrage des Schaltzustandes des Hall-Schalters 16, der aktuellen Stellung der anzutreibenden Welle, beziehungsweise des Elektromotors 4.

Selbstverständlich ist es auch möglich, einen anderen Logikschaltkreis zu verwenden, so daß eine Umschaltung je nach Programmierung entweder bei gleichen oder unterschiedlichen am Logikschaltkreis anliegenden Pegeln erfolgen kann.

Es wird deutlich, daß diese Stellvorrichtung extrem klein ausgeführt werden kann, da sowohl die Anzahl als auch die Größe der Bauteile des Getriebes minimiert sind. Zusätzlich werden die Bauraumbedürfnisse durch die berührungslose Steuereinrichtung mit Hall-Schalter und Stiftmagneten reduziert. Eine solche Stellvorrichtung ist sehr kostengünstig herzustellen und aufgrund ihrer geringen Größe fast überall im Motorraum einsetzbar. Durch den einfachen, modularen Aufbau können auch die Montagekosten gesenkt werden.

Es wird deutlich, daß die Steuereinrichtung der Stellvorrichtung und je nach erforderlichem Stellwinkel auch das Getriebe beziehungsweise das Teilkranzschneckenrad in unterschiedlicher Weise ausgeführt werden können. Auch die Lage der Stiftmagneten zueinander beziehungsweise zum Hall-Schalter kann je nach Ausführungsform und eingesetztem Getriebe variieren, ohne den Schutzumfang des Hauptanspruchs zu verlassen. Des weiteren ist es denkbar andere berührungslose Schalter zu verwenden oder die Fixierung der Einbauteile im Gehäuse anders zu verwirklichen.

## Patentansprüche

1. Stellvorrichtung für eine Verbrennungskraftmaschine mit einem Gehäuse, in dem ein Antriebsmotor (4) angeordnet ist, der über ein Getriebe (5) eine Welle eines Stellorgans antreibt, wobei zumindest ein Magnet in funktionaler Verbindung zu einem feststehend im Gehäuse angeordneten berührungslosen Schalter (16), insbesondere einem Hall-Schalter (16) steht und in fest vorgegebener Position zur Welle und mit dieser bewegbar angeordnet ist, so daß bei Bewegung des Magneten der berührungslose Schalter (16) einen Polübergang detektiert und wenigstens ein Signal erzeugt, welches eine Steuereinrichtung verarbeitet, **dadurch gekennzeichnet, daß** zwei Stiftmagnete (11) unterschiedlicher Polarität in fest vorgegebener Position zur Welle des Stellorgans angeordnet sind und in funktionaler Verbindung zum berührungslosen Schalter (16) stehen, wobei das Signal zur Voreinstellung der Laufrichtung des Motors (4) dient.

2. Stellvorrichtung nach Anspruch 1, **dadurch gekennzeichnet, daß** die Stiftmagnete (11) in einem Winkel zu einer Drehachse der Welle des Stellorgans angeordnet sind, der im wesentlichen dem Verstellwinkel zwischen Endlagen der Welle entspricht.

3. Stellvorrichtung nach Anspruch 1 oder 2, **dadurch gekennzeichnet, daß** die Stiftmagnete (11) an einem Teilkranzschneckenrad (8) angeordnet sind, das mit einer Abtriebswelle (9) des Getriebes (5) zumindest drehfest verbunden ist und über eine Schnecke (7), welche mit einer Antriebswelle (6) des Motors (4) drehfest verbunden ist, antreibbar ist.

4. Stellvorrichtung nach Anspruch 3 **dadurch gekennzeichnet, daß** das Teilkranzschneckenrad (8) zwei Aufnahmen (10) aufweist, in die die zwei Stiftmagnete (11) formschlüssig anbringbar sind.

5. Stellvorrichtung nach Anspruch 3 oder 4, **dadurch gekennzeichnet, daß** die Stiftmagnete (11) am Teilkranzschneckenrad (8) verklebt sind.

6. Stellvorrichtung nach einem der vorhergehenden Ansprüche, **dadurch gekennzeichnet, daß** das Gehäuse (2,3) zwei Lagerstellen (12,13) aufweist, in denen die Abtriebswelle (9) des Getriebes (5) gelagert ist und von denen die erste Lagerstelle (12) nach außen offen und die zweite Lagerstelle (13) nach außen geschlossen ausgeführt ist, wobei die Abtriebswelle (9) an dem in der ersten Lagerstelle (12) angeordneten Ende derart ausgeführt ist, daß eine Kupplung zur anzutreibenden Welle des Stellorgans formschlüssig mit der Abtriebswelle (9) verbindbar ist.

7. Stellvorrichtung nach Anspruch 6, **dadurch gekennzeichnet, daß** das Gehäuse (2,3) zweiteilig ausgeführt ist, wobei ein erstes Gehäuseteil (2) die erste Lagerstelle (12), einen elektrischen Anschluß (19) für einen Stecker sowie Aufnahmen (14) zur Fixierung einer Leiterplatte (15), auf der Elektronikbausteine (17) und der berührungslose Schalter (16) angeordnet sind, des Elektromotors (4) und des Getreibes (5) aufweist und ein zweites Gehäuseteil (3) die zweite Lagerstelle (13) aufweist, wobei durch Verbinden des zweiten Gehäuseteils (3) mit dem ersten Gehäuseteil (2) ein im wesentlichen dichter Verschluß der Stellvorrichtung (1) und eine feste Position der Einbauteile (4-9,15) in der Stellvorrichtung (1) herstellbar ist.

## Claims

1. An actuating device for an internal combustion engine, comprising a housing in which a drive motor (4) is arranged which drives a shaft of an actuating member via a set of gears (5), wherein at least one magnet is operationally connected with a contactless switch (16), in particular a Hall switch (16), disposed fixedly in the housing, and is arranged in a fixed, pre-determined position relative to the shaft and so as to be movable therewith, so that upon a movement of the magnet, the contactless switch (16) detects a polarity change and generates at least one signal that is processed by a control means, **characterized in that** two pin magnets (11) of different polarity are arranged in a fixed, pre-determined position relative to the shaft of the actuating member and are functionally connected with the contactless switch (16), wherein the signal serves to preset the running direction of the motor (4).

2. The actuating device of claim 1, **characterized in that** the pin magnets (11) are arranged at an angle relative to a rotational axis of the actuating member, the angle corresponding substantially to an adjustment angle between end positions of the shaft.

3. The actuating device of claim 1 or 2, **characterized in that** the pin magnets (11) are arranged at a partial ring worm gear (8) which is at least rotationally fixedly connected with an output shaft (9) of the set of gears (5) and can be driven via a worm (7) that is rotationally fixedly connected with a drive shaft (6) of the motor (4).

4. The actuating device of claim 3, **characterized in that** the partial ring worm gear (8) comprises two recesses (10) in which the two pin magnets (11) can be form fittingly arranged.

5. The actuating device of claim 3 or 4, **characterized in that** the pin magnets (11) are glued to the partial ring worm gear (8).

6. The actuating device of one of the preceding claims, **characterized in that** the housing (2, 3) comprises two journal positions (12, 13) in which the output shaft (9) of the set of gears (5) is journaled and of which the first journal position (12) is formed to be open to the outside and the second journal position (13) is formed to be closed to the outside, wherein the output shaft (9) is designed such at its end arranged in the first journal position (13) that a coupling with the actuating member shaft to be driven can be form fittingly connected with the output shaft (9).

7. The actuating device of claim 6, **characterized in that** the housing (2, 3) is of a two-piece design, wherein a first housing part (2) comprises the first journal position (12), an electrical connection (19) for a plug, as well as receptacles (14) for fixing a conductor plate (15), on which electronic components (17) and the contactless switch (16) are arranged, the electric motor (4) and the set of gears (5), and wherein a second housing part (3) comprises the second journal position (13), wherein, by connecting the second housing part (3) with the first housing part (2), a substantially tight closure of the actuating device (1) and a fixed position of the mounting parts (4-9, 15) in the actuating device (1) can be achieved.

## Revendications

1. Dispositif d'actionnement pour un moteur à combustion interne, dans lequel est disposé un moteur d'entrainement (4) entrainant, à travers une transmission (5), un arbre d'un élément d'actionnement, au moins un aimant étant lié de manière opérative à un interrupteur sans contact (16), en particulier un interrupteur Hall (16), disposé de manière fixe dans ledit boitier, l'aimant étant disposé dans une position fixement déterminée par rapport à l'arbre et de manière déplaçable avec ledit arbre, de sorte que, lors d'un déplacement dudit aimant, l'interrupteur sans contact (16) détecte une transition polaire et génère au moins un signal qui est traité par un moyen de commande, **caractérisé en ce que** deux aimants (11) en forme de broche, à polarité opposée, sont disposés dans une position fixement déterminée par rapport à l'arbre dudit élément d'actionnement et sont liés de manière opérative à l'interrupteur sans contact (16), ledit signal servant pour présélectionner le sens de rotation du moteur (4).

2. Dispositif d'actionnement selon la revendication 1, **caractérisé en ce que** les aimants (11) en forme de broche sont disposés sous un angle par rapport à un axe de rotation dudit élément d'actionnement, ledit angle correspondant sensiblement à l'angle d'ajustage entre des positions de fin dudit arbre.

3. Dispositif d'actionnement selon la revendication 1 ou 2, **caractérisé en ce que** les aimants (11) en forme de broche sont disposés à une roue à vis sans fin de type couronne partielle (8), la roue étant raccordée avec un arbre de sortie (9) de la transmission (5) au moins de manière à tourner avec ledit arbre et étant apte à être entrainée par un vis sans fin (7), qui est raccordé avec un arbre d'entrée (6) du moteur (4) de sorte à tourner avec ledit arbre.

4. Dispositif d'actionnement selon la revendication 3, **caractérisé en ce que** la roue à vis sans fin de type couronne partielle (8) comprend deux réceptacles (10) dans lesquels les deux aimants (11) en forme de broche peuvent être disposés par engagement positif.

5. Dispositif d'actionnement selon la revendication 3 ou 4, **caractérisé en ce que** les aimants (11) en forme de broche sont collés sur la roue à vis sans fin de type couronne partielle (8).

6. Dispositif d'actionnement selon l'une quelconque des revendications précédentes, **caractérisé en ce que** le boitier (2, 3) comprend deux points d'appui (12, 13) où l'arbre de sortie (9) de la transmission (5) est supporté et dont le premier point d'appui (12) est ouvert vers l'extérieur et le deuxième point d'appui (13) est fermé vers l'extérieur, l'arbre de sortie (9) étant réalisé à son extrémité disposée dans le premier point d'appui (12), de sorte qu'un embrayage pour l'arbre à entrainer dudit élément d'actionnement peut être raccordé à engagement positif avec l'arbre de sortie (9).

7. Dispositif d'actionnement selon la revendication 6, **caractérisé en ce que** le boitier (2, 3) est en deux parties, une première partie de boitier (2) comprenant le premier point d'appui (12), une prise électrique (19) pour une fiche, et des réceptacles (14) pour la fixation d'un circuit imprimé (15), sur lequel circuit les composants électroniques (17) et l'interrupteur sans contact (16) sont disposés, du moteur électrique (4) et de la transmission, et une deuxième partie de boitier (3) comprenant le deuxième point d'appui (13), il étant possible d'obtenir, par assemblage de la deuxième partie de boitier (3) et la première partie de boitier (3), une fermeture sensiblement étanche du dispositif d'actionnement (1) et une position fixe des éléments à insérer (4-9, 15) dans le dispositif d'actionnement (1).
